# EUROPÄISCHE PATENTSCHRIFT

(11) **EP 1 214 181 B1**
(45) Veröffentlichungstag und Bekanntmachung des Hinweises auf die Patenterteilung: **12.11.2003**
(21) Anmeldenummer: 00991966.3
(22) Anmeldetag: 22.09.2000
(51) Int. Cl.: B29B 17/00, C08J 11/06

(54) **VERFAHREN UND VORRICHTUNG ZUM RECYCLIEREN VON PET-GUT**
METHOD AND DEVICE FOR RECYCLING PET MATERIALS
PROCEDE ET DISPOSITIF DE RECYCLAGE DE MATERIAU PET

(30) Priorität: 22.09.1999 AT 162099
(43) Veröffentlichungstag der Anmeldung: 19.06.2002
(73) Patentinhaber: Bacher, Helmut, 4490 St. Florian (AT); Schulz, Helmuth, 4020 Linz (AT); Wendelin, Georg, 4033 Linz (AT)
(72) Erfinder: Bacher, Helmut, 4490 St. Florian (AT); Schulz, Helmuth, 4020 Linz (AT); Wendelin, Georg, 4033 Linz (AT)
(74) Vertreter: Jellinek, Gerhard (AT)
(86) Internationale Anmeldenummer: AT0000255
(87) Internationale Veröffentlichungsnummer: WO01021372

(56) Entgegenhaltungen:
- EP-A- 0 074 346
- EP-A- 0 379 684
- EP-A- 0 698 462
- EP-A- 0 779 136
- WO-A-93/18902
- DD-A- 274 436
- DE-A- 1 957 333

## Beschreibung

Die Erfindung betrifft ein Verfahren und eine Vorrichtung zum Recyclieren von PET-Gut gemäß dem Oberbegriff des Patentanspruches 1 bzw. gemäß dem Oberbegriff des Patentanspruches 16. Ein derartiger Stand der Technik ist aus der WO-A- 93/18902 bekannt.

Unter PET-Gut (Gut aus Polyethylenterephtalat) sind alle PET-Materialien und/oder PET-Gegenstände zu verstehen, auch aus BOPET (bi-orientierem PET), insbesondere Stücke, Flaschenmahlgut, Folien, Fasern, Flocken usw..

Beim Recyclieren von Gegenständen aus Polyethylenterephtalat bzw. von Polyethylenterephtalat-Materialien ist es von Bedeutung, dass das zu recyclierende PET-Gut möglichst trocken ist, um eine hydrolytischen Abbau der Molekülketten durch Wasserstoff bei der Plastifizierung bzw. beim Aufschmelzen zu verhindern. Eine effiziente Trocknung ist aber nur bei höherer Temperatur möglich, bei der die amorphen PET-Teilchen bzw. -stücke zusammenkleben. Aus diesem Grund soll vor einer Trocknung eine Kristallisation des PET-Guts erreicht werden. Eine derartige Kristallisation kann dadurch erreicht werden, dass die Teilchen gleichmäßig bei einer Temperatur, die niedriger ist als die Trocknungstemperatur, aber auf jeden Fall niedriger als die Plastifizierungstemperatur, bewegt bzw. mechanisch beaufschlagt werden.

Da jedoch die zur Recyclierung vorgesehenen PET-Materialien bzw. aus PET bestehenden Gegenstände, insbesondere PET-Flaschen, zumeist verunreinigt sind und einer Waschung und allenfalls einer vorab erfolgenden Zerkleinerung unterworfen werden, bei der eine gleichzeitige Verschmutzung oft nicht zu vermeiden ist, erfolgt vorab zumeist eine definierte Zerkleinerung bzw. ein Mahlen, ein Waschen und ein Trocknen des Gutes. Eine derartige Vortrocknung sollte zumindest so effizient sein, dass der Wassergehalt einen Wert von 1,5 Gew.-% des einzusetzenden bzw. zu recyclierenden PET-Gutes nicht überschreitet.

Insbesondere ist es Ziel der Erfindung, ein Verfahren und eine Vorrichtung der eingangs genannten Art vorzusehen, mit der PET-Gut einer raschen und möglichst energiesparenden Recyclierung zu unterziehen ist, wobei das mit der sich ergebenden Schmelze hergestellte PET-Granulat bzw. daraus hergestellte PET-Gegenstände hohe Viskositätswerte besitzen, insbesondere eine Viskosität aufweisen, die mit den Viskositätswerten des zu recyclierenden PET-Gutes vergleichbar sind. Des weiteren soll die erzielte Schmelze bzw. das aus der Schmelze hergestellte PET-Granulat den lebensmitteltechnischen Vorschriften genügen, d.h. dass in dem zur Recyclierung aufgegebenen PET-Material enthaltene Schadstoffe bzw. Kontaminierungen durch entsprechende Behandlung möglichst weitgehend abgeschieden werden.

Dieses Ziel wird bei einem Verfahren der eingangs genannten Art gemäß den im Kennzeichen des Anspruches 1 angeführten Merkmalen erreicht. Eine erfindungsgemäße Anordnung der eingangs genannten Art ist durch die im Kennzeichen des Anspruches 19 angeführten Merkmale charakterisiert.

Es erfolgt somit eine zweistufige Behandlung des anfallenden bzw. aufgegebenen PET-Gutes, wobei im Zuge der Vorbehandlung in einer Vorbehandlungseinrichtung keine Plastifizierung des PET-Gutes, jedoch eine Kristallisierung und eine gewisse Vorverdichtung bei gleichzeitiger Trocknung erfolgt. Die Vorverdichtung wird bei entsprechender Temperatur durch mechanische Beaufschlagung bzw. Energieeinbringung in das PET-Gut bewirkt. Insbesondere erfolgt die Erhöhung bzw. Einstellung der Temperatur durch die mechanische Beaufschlagung des PET-Gutes bzw. durch Umwandlung der Rotationsenergie zumindest eines umlaufenden Misch- und/oder Zerkleinerungselementes in thermische Energie aufgrund der auftretenden Reibungsverluste.

Im Zuge der Hauptbehandlung in einer Hauptbehandlungseinrichtung wird das PET-Gut bei erhöhter Temperatur weiter getrocknet und kristallisiert und unter hohem Vakuum für eine bestimmte mittlere Verweilzeit gehalten. Wiederum erfolgt eine mechanische Beaufschlagung bzw. Materialverdichtung und Einbringung von Energie mittels zumindest eines umlaufenden Misch- bzw. Zerkleinerungselementes, das aufgrund seiner Rotation die entsprechende thermische Energie in das PET-Gut einbringt und dieses weiter erwärmt..

Die Hauptbehandlung, die unter Vakuum erfolgt, verringert die Restfeuchte auf einen vorgegebenen bestimmten mittleren Wert und bewirkt auch, dass flüchtige Schadstoffe aus dem PET-Gut abgeschieden werden.

Die Temperatur bei der Hauptbehandlung wird unter der Schmelztemperatur des PET-Gutes gehalten, insbesondere etwa 40 bis 60°C unter der Schmelztemperatur. Es ist jedoch anzustreben, diese Temperatur möglichst hoch anzusetzen.

Erst nach der Hauptbehandlung erfolgt eine Plastifizierung des abgeführten PET-Gutes mittels eines vorzugsweise unmittelbar an die Hauptbehandlungseinrichtung angeschlossenen Extruders. Aufgrund des direkten, vakuumdichten Anschlusses kann das Vakuum in der Hauptbehandlungseinrichtung in den Eingangsbereich des Extruders hineinwirken. Dieser Extruder weist eine Plastifizierzone auf, an die sich eine Kompressionsund Stauzone anschließt. An diese Stauzone schließt sich eine Entgasungs- bzw. Evakuierzone an, in welcher flüchtige Substanzen aus der Schmelze mittels eines Vakuums, insbesondere Hochvakuums, abgesaugt werden. Es kann dabei eine ein- oder mehrstufige Entgasung vorgesehen werden. Es können auch mehrere Kompressions- und Dekompressionszonen mit unterschiedlichen Vakuumwerten aufeinanderfolgend angeordnet werden. Damit können auch hartnäckige bzw. schwer verdampfbare Kontaminationen ausgedampft werden.

Durch entsprechende Wahl der Temperaturen und der Verweilzeiten in der Vorbehandlungseinrichtung und in der Hauptbehandlungseinrichtung können der Viskositätswert der dem Extruder entnommenen Schmelze und des aus der Schmelze hergestellten PET-Granulates eingestellt werden. Durch entsprechend lange Verweilzeiten und entsprechende hohe Temperaturen im Vakuum wird ein positiver Einfluss auf die Viskosität ausgeübt bzw. es erfolgt eine Repolymerisation.

Vorteilhafte Ausführungsformen der Erfindung sind der folgenden Beschreibung, den Patentansprüchen und der Zeichnung zu entnehmen. In der Zeichnung sind zwei Ausführungsbeispiele der Erfindung näher dargestellt.

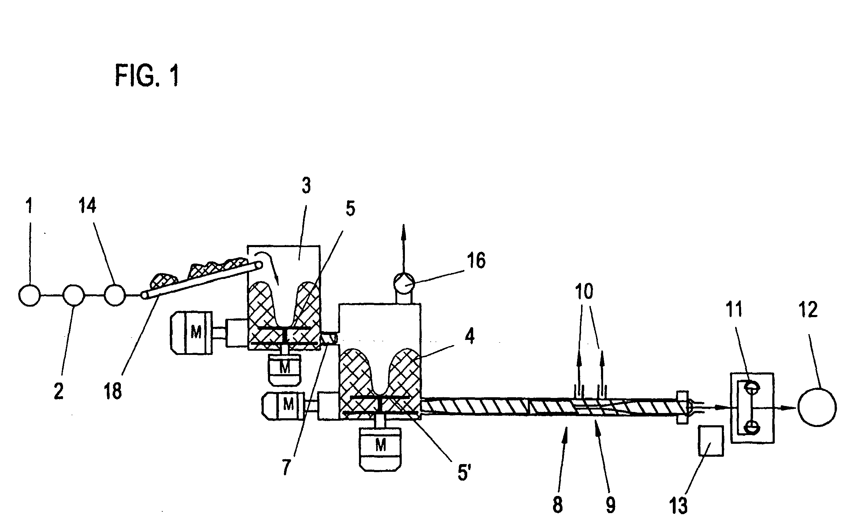

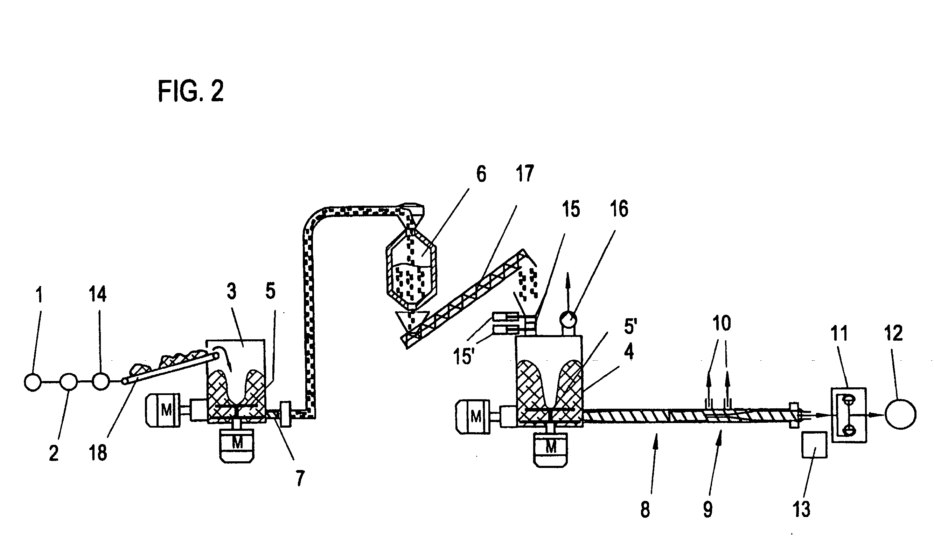

Fig.1 zeigt eine Ausführungsform der Erfindung, bei der PET-Gut von der Vorbehandlungseinrichtung direkt der Hauptbehandlungseinrichtung zugeführt wird. Fig. 2 zeigt eine Ausführungsform der Erfindung, bei der das PET-Gut von der Vorbehandlungseinrichtung der Hauptbehandlungseinrichtung über einen Zwischenspeicher zugeführt wird.

Zu recyclierendes PET, insbesondere PET-Materialien und/oder Gegenstände aus PET, kann in einer Zerkleinerungseinheit 1 zerkleinert und über eine Wascheinheit 2 einer Einheit 14 zur Vortrocknung zugeführt werden. Allenfalls zu recyclierende gebrauchte PET-Flaschen und PET-Gebinde werden vorteilhafterweise vorsortiert und zu Mahlgut mit einer durchschnittlichen Größe von etwa 15 bis 25 mm vorgemahlen. Die Restfeuchte dieses gemahlenen, gewaschenen und getrockneten PET-Gutes soll aus verfahrenstechnischen Gründen so gering wie möglich sein und maximal 1,5 Gew.-% betragen.

Zur Vorbehandlung wird das PET-Gut einer Vorbehandlungseinrichtung 3 zur Vortrocknung zugeführt, in der es gegebenenfalls auch zerkleinert werden kann. In der Vorbehandlungseinrichtung 3 erfolgen gleichzeitig mit der Trocknung eine Erwärmung und eine Kristallisation des Gutes. Hiefür ist in der Vorbehandlungseinrichtung 3 ein rotierendes Misch- und/oder Zerkleinerungselement 5 angeordnet, das mit einer Umfangsgeschwindigkeit von 9 bis 15 m/s rotiert. Damit wird gewährleistet, dass die mechanische Motorenergie durch Friktion zwischen den Mischorganen und den PET-Stücken bzw. dem PET-Gut in Wärme umgewandelt wird. Der Durchsatz des PET-Gutes wird derart eingestellt, dass dessen mittlere Verweilzeit etwa 35 bis 65 min, vorzugsweise 40 bis 60 min, beträgt. Die Temperatur des PET-Gutes wird dabei auf etwa 140 bis 190°C, vorzugsweise 150 bis 160°C, eingestellt. Bei dieser Temperatur verdunstet das Oberflächenwasser sofort und infolge der langen Verweilzeit emigriert auch ein erheblicher Anteil der aufgenommenen Feuchtigkeit und anderer aufgenommener Kontaminierungen. Es ist nicht zwingend erforderlich, jedoch vorteilhaft, wenn die Behandlung des PET-Gutes in der Vorbehandlungseinrichtung 3 unter Vakuum erfolgt. Damit kann die Verweilzeit des PET-Gutes in der Vorbehandlungseinrichtung 3 verringert bzw. deren Volumen entsprechend verkleinert werden. Eine derartige Verfahrensführung ist insbesondere dann berechtigt, wenn das zu behandelnde Material vor Oxydation besonders geschützt werden soll bzw. wenn eine Zerkleinerung in der Vorbehandlungseinrichtung 3 nicht notwendig ist.

Von der Vorbehandlungseinrichtung 3, die insbesondere mittels einer Beschickungseinheit 18, z.B. einem Förderband, vorzugsweise kontinuierlich, mit PET-Gut beschickt wird, wird das PET-Gut mit einer Fördereinheit 7, insbesondere einer Förderschnecke, abgeführt. Es kann direkt (Fig. 1) oder über einen Zwischenspeicher 6 (Fig. 2) und über eine weitere Fördereinheit, z.B. eine Förderschnecke 17, einer Hauptbehandlungseinrichtung 4 zugeführt werden.

Vorzugsweise wird die Hauptbehandlungseinrichtung 4 mit erwärmtem PET-Gut beschickt.

Die Fördereinheit 7 wird von der Vorbehandlungseinrichtung 3 befüllt und auf einer Temperatur von 140 bis 170°C, insbesondere 150 bis 160°C, gehalten.

In der Hauptbehandlungseinrichtung 4 werden die zum Teil locker zusammengebackenen Stücke des PET-Gutes durch ein rotierendes Misch- und/oder Zerkleinerungselement 5' weitgehend zerschlagen und die Temperatur des Kunststoffgutes wird auf 170 bis 210°C, insbesondere 180 bis 210°C, angehoben. Die Umfangsgeschwindigkeit des Misch- und/oder Zerkleinerungselementes 5' entspricht im wesentlichen etwa der Umfangsgeschwindigkeit des Misch- und/oder Zerkleinerungselementes 5 in der Vorbehandlungseinrichtung 3 und beträgt ebenfalls etwa 9 bis 15 m/s.

Das Volumen des Behälters der Hauptbehandlungseinrichtung 4 und der Durchsatz des Gutes sind derart gewählt, dass für das PET-Gut eine mittlere Verweilzeit von 40 bis 90 min, insbesondere 50 bis 90 min, erreicht wird. Der Druck in der Hauptbehandlungseinrichtung 4 wird auf einen Wert von weniger als 20 mbar, vorzugsweise zur Erzielung bester Werte auf weniger als 10 mbar, eingestellt.

Die Befüllung der Hauptbehandlungseinrichtung 4 kann direkt mittels der Schnecke 7 oder mittels einer Schleusenanordnung 15 erfolgen, die mit zwei gasdichten bzw. vakuumdichten Schiebern 15' arbeitet und somit das PET-Gut chargenweise einbringt. An die Hauptbehandlungseinrichtung 4 ist eine Vakuumpumpe 16 angeschlossen.

An die Hauptbehandlungseinrichtung 4 ist ein Extruder 8 angeschlossen, welcher das von der Hauptbehandlungseinrichtung 4 abgegebene PET-Gut weiterbearbeitet. Im Extruder 8 wird PET-Gut plastifiziert bzw. geschmolzen. Der Extruder 8 kann zumindest eine Entgasungszone 9 besitzen, wobei an die Entgasungsöffnung im Extrudergehäuse eine Vakuumpumpe 10 angeschlossen ist, um einen Druck von kleiner 10 mbar, insbesondere kleiner 5 mbar, einzustellen. Durch die Anordnung von zumindest einer Entgasungszone und gegebenenfalls Anlegen von Vakuum kann auf die Abscheidung von Feuchtigkeit und/oder anderen Abspaltungsprodukten Einfluss genommen werden. Vorteilhafterweise hat der Extruder 8 zumindest eine doppelte Entgasungszone.

Es zeigte sich, dass bei Einhaltung der obengenannten Verfahrensparameter ein Viskositätswert des aufgeschmolzenen PET-Gutes bzw. des PET-Granulates erreicht werden konnte, der um etwa 5% über dem Viskositätswerten des aufgegebenen PET-Gutes lag. Dieser Viskositätsanstieg konnte insbesondere durch die zweistufige Verfahrensführung sowie durch die entsprechende Einstellung der Temperatur, der Verweilzeiten, der Vakuumdrucke und der Anzahl der Vakuum- bzw. Entgasungszonen erreicht werden. Es zeigte sich femer, dass außer der Feuchtigkeit auch andere Abspaltungsprodukte durch entsprechende Wahl von Temperatur, Druck, Verweilzeiten und Scherung im Extruder abgeschieden werden konnten.

Bei einer bevorzugten Ausführungsform der Erfindung ist der Extruder 8 gasdicht an die Hauptbehandlungseinrichtung 4 angeschlossen, sodass das Vakuum der Hauptbehandlungseinrichtung 4 in den Extrudereingang wirkt.

An den Extruder 8 kann eine Sieb- bzw. Filtrationseinrichtung 11 angeschlossen sein, von der die durchtretende Schmelze einer Einrichtung 12 zur Herstellung von PET-Granulat zugeführt ist. Zwischen dem Extruder 8 und der Filtrationseinrichtung 11 kann eine Einrichtung 13 für Messung der Viskosität der erhaltenen Schmelze angeordnet sein.

Vorteilhafterweise erfolgt die Förderung des PET-Gutes von der Vorbehandlungseinrichtung 3 zur Hauptbehandlungseinrichtung 4 unter Luftabschluss, um eine Wiederbefeuchtung des vorgetrockneten PET-Gutes auszuschließen.

Um zu vermeiden, dass das an den Extruder 8, insbesondere in den Entgasungszonen, angelegte Vakuum auf die Hauptbehandlungseinrichtung 4 rückwirkt, ist Vorsorge zu treffen, dass die Kompression im Extruder 8 bzw. die Dichtwirkung des von dem Extruder geförderten Materials derart groß ist, dass eine Rückwirkung des Vakuums auf die Hauptbehandlungseinrichtung 4 vermieden ist. Gleiches gilt für eine Rückwirkung des Vakuums der Hauptbehandlungseinrichtung 4 auf die Vorbehandlungseinrichtung 3. In diesem Fall kann jedoch durch die Anbringung der Schleuse mit geeigneten Schleusenschiebem 15' eine Rückwirkung ausgeschlossen werden. Bei direkter Verbindung der Vorbehandlungseinrichtung 3 mit der Hauptbehandlungseinrichtung 4 ist auf eine vakuumdichte Förderschnecke zu achten.

Bei der Beschickung der Hauptbehandlungseinrichtung 4 wird in der der Hauptbehandlungseinrichtung 4 vorgeschalteten Schleuse das aufgegebene PET-Gut bereits dem Vakuum ausgesetzt, so dass in der Hauptbehandlungseinrichtung 4 kein nennenswerter Druckabfall stattfinden kann. Dies ist von Vorteil, da die Höhe des Vakuums einen direkten Einfluss auf die Abspaltung der Schadstoffe und auf die Viskosität hat.

Bei Verwendung eines Zwischenspeichers 6 (Fig. 2) kann eine ungleichmäßige Beschickung der Vorbehandlungseinrichtung 3 toleriert werden.

Zumeist genügt es, die Temperaturerhöhung des aufgegebenen PET-Gutes in der Vorbehandlungseinrichtung 3 und in der Hauptbehandlungseinrichtung 4 durch die Energieeinbringung mit den rotierenden Misch- und/oder Zerkleinerungselementen 5,5' zu erreichen. Die Vorbehandlungseinrichtung 3 und/oder die Hauptbehandlungseinrichtung 4 können aber auch zusätzlich beheizt werden.

Im Zuge der Vor- und Hauptbehandlung kann das PET-Gut auch zerkleinert werden, die Misch- und/oder Zerkleinerungselemente sind dann entsprechend auszubilden.

Die Antriebe für die Misch- und/oder Zerkleinerungselemente 5,5' bzw. die Fördereinrichtungen 7,17 bzw. für den Extruder 8 sind nicht dargestellt bzw. mit M bezeichnet.

## Patentansprüche

1. Verfahren zum Recyclen von Kunststoff-Gut, bei dem das anfallende Gut durch Bewegung erwärmt und dadurch getrocknet und danach plastifiziert bzw. aufgeschmolzen wird, wobei das anfallende Gut in zwei Stufen behandelt wird, und wobei in der ersten Stufe das Gut einer Vorbehandlung durch Beaufschlagung mit mechanischer Energie unterworfen und dadurch erwärmt und bei erhöhter Temperatur getrocknet wird und sodann in der dem Plastifizieren bzw. Aufschmelzen vorangehenden zweiten Stufe eine Hauptbehandlung des Gutes erfolgt, bei welcher unter Vakuumbedingungen das Gut durch nochmalige Beaufschlagung mit mechanischer Energie getrocknet wird, **dadurch gekennzeichnet, dass** PET-Gut in der ersten Stufe zugleich mit der Trocknung kristallisiert wird und in der zweiten Stufe, deren Hauptbehandlung bei einer gegenüber der Vorbehandlung erhöhten Temperatur erfolgt, weiter kristallisiert wird, worauf das PET-Gut nach seiner Plastifizierung bzw. Aufschmelzung und gegebenenfalls nach einer Filterung, zu PET-Granulat bzw. PET-Gegenständen verarbeitet wird.

2. Verfahren nach Anspruch 1, **dadurch gekennzeichnet, dass** das anfallende PET-Gut vor der Vorbehandlung einer Vorzerkleinerung und/oder Waschung und/oder Vortrocknung unterworfen wird.

3. Verfahren nach Anspruch 1 oder 2, **dadurch gekennzeichnet, dass** auch die Temperatur der Hauptbehandlung unter der Plastifizierungstemperatur des PET-Gutes gehalten wird.

4. Verfahren nach einem der Ansprüche 1 bis 3, **dadurch gekennzeichnet, dass** die Vorbehandlung von PET-Stücken und/oder PET-Flaschenmahlgut in einem Temperaturbereich von 140 bis 190°C, vorzugsweise von 150 bis 160°C, unter gleichzeitiger mechanischer Behandlung bzw. eine Erwärmung bewirkender Energiebeaufschlagung mittels zumindest eines Misch- und/oder Zerkleinerungselementes erfolgt, wobei die mittlere Verweilzeit des PET-Gutes bzw. die Zeitdauer der Vorbehandlung 35 bis 65 min, vorzugsweise 40 bis 60 min, beträgt.

5. Verfahren nach einem der Ansprüche 1 bis 3, **dadurch gekennzeichnet, dass** die Vorbehandlung von PET-Folien und/oder PET-Fasern und/oder PET-Flocken in einem Temperaturbereich von 170 bis 200° C, vorzugsweise 180 bis 200°C, unter gleichzeitiger mechanischer Behandlung bzw. eine Erwärmung bewirkender Energiebeaufschlagung mittels zumindest eines Misch- und/oder Zerkleinerungselementes erfolgt, wobei die mittlere Verweilzeit des PET-Gutes bzw. die Zeitdauer der Vorbehandlung 10 bis 30 min, vorzugsweise 10 bis 15 min, beträgt.

6. Verfahren nach einem der Ansprüche 1 bis 5, **dadurch gekennzeichnet, dass** auch die Vorbehandlung unter Vakuum erfolgt.

7. Verfahren nach Anspruch 4 oder 5, **dadurch gekennzeichnet, dass** die Vorbehandlung unter Umgebungsdruck erfolgt.

8. Verfahren nach Anspruch 4, **dadurch gekennzeichnet, dass** bei dieser Temperatur das Oberflächenwasser sofort verdunstet und infolge der langen Verweilzeit auch ein erheblicher Anteil der aufgenommenen Feuchtigkeit und anderer aufgenommener Kontaminierungen emigriert.

9. Verfahren nach einem der Ansprüche 1 bis 8, **dadurch gekennzeichnet, dass** das PET-Gut in kontinuierlichem Strom der Vorbehandlung unterzogen wird.

10. Verfahren nach einem der Ansprüche 1 bis 9, **dadurch gekennzeichnet, dass** das vorbehandelte PET-Gut zwischen der Vorbehandlung und der Hauptbehandlung einer Zwischenspeicherung unterzogen wird, deren Dauer 80 bis 120 % der Zeitdauer der Vorbehandlung entspricht, und dass das vorbehandelte PET-Gut während der Zwischenspeicherung und/oder während der Zuführung zur Hauptbehandlung auf einer möglichst gleichmäßigen Temperatur, insbesondere von 130 bis 190°C, vorzugsweise von 150 bis 170°C, gehalten wird.

11. Verfahren nach einem der Ansprüche 1 bis 10, **dadurch gekennzeichnet, dass** bei der unter Vakuum, insbesondere bei einem Druck von weniger als 20 mbar, vorzugsweise weniger als 10 mbar, erfolgenden Hauptbehandlung die vorbehandelten PET-Stücke und/oder das Flaschenmahlgut bei einer Temperatur von 170 bis 210°C, vorzugsweise 180 bis 200°C, mechanisch behandelt bzw. einer eine Erwärmung bewirkenden Energiebeaufschlagung mit zumindest einem, vorzugsweise rotierenden, Misch- und/oder Zerkleinerungselement unterzogen werden, wobei die mittlere Verweilzeit des PET-Gutes bzw. die Zeitdauer der Hauptbehandlung 40 bis 100 min, insbesondere 50 bis 90 min, beträgt.

12. Verfahren nach Anspruch 11, **dadurch gekennzeichnet, dass** die Hauptbehandlung bei einem Druck von weniger als 20 mbar, vorzugsweise weniger als 10 mbar, durchgeführt wird.

13. Verfahren nach einem der Ansprüche 1 bis 10, **dadurch gekennzeichnet, dass** bei der unter Vakuum erfolgenden Hauptbehandlung die vorbehandelten PET-Folien und/oder PET-Fasern bei einer Temperatur von 160 bis 210°C, vorzugsweise von 170 bis 205°C, behandelt bzw. einer mechanischen eine Erwärmung bewirkenden Energiebeaufschlagung mit zumindest einem Misch- und/oder Zerkleinerungselement unterzogen werden, wobei die mittlere Verweilzeit des PET-Gutes bzw. die Zeitdauer der Hauptbehandlung 5 bis 25 min, insbesondere 10 bis 15 min, beträgt.

14. Verfahren nach Anspruch 13, **dadurch gekennzeichnet, dass** die Hauptbehandlung bei einem Druck von weniger als 150 mbar, vorzugsweise weniger als 50 mbar, durchgeführt wird.

15. Verfahren nach einem der Ansprüche 1 bis 14, **dadurch gekennzeichnet, dass** ein rotierendes Misch- und/oder Zerkleinerungselement eingesetzt wird.

16. Verfahren nach einem der Ansprüche 1 bis 15, **dadurch gekennzeichnet, dass** das PET-Gut vor der Vorbehandlung auf Abmessungen von 15 bis 25 mm zerkleinert wird.

17. Verfahren nach einem der Ansprüche 1 bis 16, **dadurch gekennzeichnet, dass** das anfallende PET-Gut vor der Vorbehandlung vorzerkleinert und/oder gewaschen und/oder vorgetrocknet wird.

18. Verfahren nach einem der Ansprüche 1 bis 17, **dadurch gekennzeichnet, dass** das PET-Gut von der Hauptbehandlungseinrichtung (4) dem Extruder (8) unter Vakuumbedingungen aufgegeben wird bzw. das in der Hauptbehandlungseinrichtung (4) herrschenden Vakuum in den Eingangsbereich des Extruders (8) hineinwirkt.

19. Vorrichtung zur Durchführung des Verfahrens nach einem der Ansprüche 1 bis 18, wobei für die Behandlung des anfallenden Kunststoff-Gutes zwei Behandlungsstufen vorgesehen sind, in deren erster für eine Vorbehandlung des anfallenden Gutes eine Vorbehandlungseinrichtung (3) mit mechanischen Behandlungselementen (5) für eine Trocknung des Gutes bei erhöhter Temperatur vorgesehen ist, wobei dieser ersten Stufe eine zweite Behandlungsstufe mit einer evakuierbaren Hauptbehandlungseinrichtung (4) mit mechanischen Behandlungselementen (5') für eine weitere Trocknung des von der Vorbehandlungseinrichtung (3) zugeführten Gutes nachgeordnet ist, und dieser zweiten Stufe eine Einrichtung zur Plastifizierung bzw. Aufschmelzung des Gutes folgt, **dadurch gekennzeichnet, dass** die erste Stufe mechanische Behandlungselemente (5) für die Trocknung und gleichzeitige Kristallisierung von PET-Gut enthält und die zweite Stufe mechanische Behandlungselemente (5') für eine weitere Trocknung, Kristallisation und Temperaturerhöhung des PET-Gutes enthält.

20. Vorrichtung nach Anspruch 19, **dadurch gekennzeichnet, dass** die Vorbehandlungseinrichtung (3) auch Behandlungselemente (5) zur Zerkleinerung des PET-Gutes aufweist.

21. Vorrichtung nach Anspruch 19 oder 20, **dadurch gekennzeichnet, dass** sowohl in der Vorbehandlungseinrichtung (3) als auch in der Hauptbehandlungseinrichtung (4) jeweils zumindest ein rotierendes Misch- und/oder Zerkleinerungselement (5,5') angeordnet ist, welches das PET-Gut mechanisch behandelt und erwärmt.

22. Vorrichtung nach Anspruch 21, **dadurch gekennzeichnet, dass** für die Zerkleinerung, insbesondere von PET-Stücken und/oder Flaschenmahlgut, zumindest ein Mischund Zerkleinerungselement (5, 5') in der Vorbehandlungseinrichtung (3) mit einer Umfangsgeschwindigkeit von 9 bis 15 m/s und in der Hauptbehandlungseinrichtung (4) mit einer Umfangsgeschwindigkeit von ebenfalls 9 bis 15 m/s rotiert.

23. Vorrichtung nach Anspruch 21, **dadurch gekennzeichnet, dass** für die Zerkleinerung, insbesondere von PET-Folien und/oder PET-Fasern und/oder PET-Flocken, zumindest ein Misch- und Zerkleinerungselement (5, 5') sowohl in der Vorbehandlungseinrichtung (3) als auch in der Hauptbehandlungseinrichtung (4) jeweils mit einer Umfangsgeschwindigkeit von 15 bis 35 m/s, insbesondere von 20 bis 30 m/s, rotiert.

24. Vorrichtung nach einem der Ansprüche 19 bis 23, **dadurch gekennzeichnet, dass** zwischen der Vorbehandlungseinrichtung (3) und Hauptbehandlungseinrichtung (4) ein Zwischenspeicher (6) eingeschaltet ist, dessen Volumen 100 bis 200% des Volumens der Vorbehandlungseinrichtung (3) beträgt.

25. Vorrichtung nach einem der Ansprüche 19 bis 24, **dadurch gekennzeichnet, dass** zwischen der Vorbehandlungseinrichtung (3) und dem Zwischenspeicher (6) und zwischen dem Zwischenspeicher (6) und der Hauptbehandlungseinrichtung (4) jeweils eine thermisch isolierte und/oder beheizte Fördereinheit (7), vorzugsweise eine Förderschnecke oder ein Extruder, angeordnet ist.

26. Vorrichtung nach einem der Ansprüche 19 bis 25, **dadurch gekennzeichnet, dass** das Volumen der Hauptbehandlungseinrichtung (4) 80 bis 200 %, insbesondere 100 bis 180 %, des Volumens der Vorbehandlungseinrichtung (3) beträgt.

27. Vorrichtung nach einem der Ansprüche 19 bis 26, **dadurch gekennzeichnet, dass** an die Hauptbehandlungseinrichtung (4) ein Extruder (8) angeschlossen ist, in dem das der Hauptbehandlungseinrichtung (4) entnommene PET-Gut auf eine Temperatur von 260 bis 275°C erwärmt und plastifiziert bzw. aufgeschmolzen wird.

28. Vorrichtung nach Anspruch 27, **dadurch gekennzeichnet, dass** der Extruder (8) gas- bzw. vakuumdicht an die Hauptbehandlungseinrichtung (4) angeschlossen ist und der Eingangsbereich des Extruders (8) druckmäßig mit dem Innenraum der Hauptbehandlungseinrichtung (4) kommuniziert bzw. der Druck in der Hauptbehandtungseinrichtung (4) dem Druck im Eingangsbereich des Extruders (8) entspricht.

29. Vorrichtung nach Anspruch 27 oder 28, **dadurch gekennzeichnet, dass** der Extruder (8) zumindest eine Entgasungszone (9) aufweist, an die eine Vakuumpumpe (10) angeschlossen ist, mit der in der Entgasungszone (9) ein Druck kleiner 40 mbar, insbesondere kleiner 10 mbar, einstellbar ist.

30. Vorrichtung nach einem der Ansprüche 19 bis 29, **dadurch gekennzeichnet, dass** an den Extruder (8) eine Filtrationseinrichtung (11) für PET-Schmelze und an diese Einrichtung (11) gegebenenfalls eine Einrichtung (12) zur Erzeugung von Fertig- oder Halbfertigfabrikaten, z.B. PET-Granulat, angeschlossen ist.

31. Vorrichtung nach Anspruch 30, **dadurch gekennzeichnet, dass** zwischen dem Extruder (8) und der Filtrationseinrichtung (11) eine Messeinrichtung (13) zur Feststellung der Viskosität der Schmelze angeordnet ist.

32. Vorrichtung nach einem der Ansprüche 19 bis 31, **dadurch gekennzeichnet, dass** der Druck in der Hauptbehandlungseinrichtung (4) auf kleiner 150 mbar, vorzugsweise kleiner 20 mbar, einstellbar ist.

33. Vorrichtung nach einem der Ansprüche 19 bis 32, **dadurch gekennzeichnet, dass** eine zusätzliche Heizung für die Vorbehandlungseinrichtung (3) und/oder die Hauptbehandlungseinrichtung (4) vorgesehen ist.

## Claims

1. A method of recycling plastics material, in which the accumulated material is heated by agitation and thereby dried and then plasticised or melted, wherein the accumulated material is treated in two stages, and wherein in the first stage the material undergoes pretreatment by impingement with mechanical energy and is thereby heated and dried at an elevated temperature, and then main treatment of the material is carried out in the second stage which precedes plasticising or melting and in which the material is dried under vacuum conditions by further impingement with mechanical energy, **characterised in that** PET material is crystallised in the first stage at the same time as being dried and is further crystallised in the second stage, in which the main treatment is carried out at a higher temperature than the pretreatment, whereupon the PET material is processed to form a PET granulate or PET articles after being plasticised or melted and, if necessary, filtered.

2. A method according to claim 1, **characterised in that** the accumulated PET material undergoes precomminution and/or washing and/or predrying before pretreatment.

3. A method according to claim 1 or 2, **characterised in that** the temperature of the main treatment is also held below the plasticising temperature of the PET material.

4. A method according to any one of claims 1 to 3, **characterised in that** the pretreatment of PET pieces and/or ground PET bottle material is carried out in a temperature range from 140°C to 190°C, preferably 150°C to 160°C, with simultaneous mechanical treatment or heat-inducing energy impingement by means of at least one mixing and/or comminuting device, the average residence time of the PET material or the duration of the pretreatment being 35 to 65 mins, preferably 40 to 60 mins.

5. A method according to any one of claims 1 to 3, **characterised in that** the pretreatment of PET sheets and/or PET fibres and/or PET flakes is carried out in a temperature range from 170°C to 200°C, preferably 180°C to 200°C, with simultaneous mechanical treatment or heat-inducing energy impingement by means of at least one mixing and/or comminuting device, the average residence time of the PET material or the duration of the pretreatment being 10 to 30 mins, preferably 10 to 15 mins.

6. A method according to any one of claims 1 to 5, **characterised in that** the pretreatment is also carried out under vacuum.

7. A method according to claim 4 or 5, **characterised in that** the pretreatment is carried out under ambient pressure.

8. A method according to claim 4, **characterised in that** at this temperature the surface water evaporates immediately and by the long residence time also a substantial portion of the absorbed humidity and other absorbed contaminants emigrate.

9. A method according to any one of claims 1 to 8, **characterised in that** the PET material undergoes pretreatment in a continuous flow.

10. A method according to any one of claims 1 to 9, **characterised in that**, between pretreatment and main treatment, the pretreated PET material undergoes temporary storage, the duration of which corresponds to 80% to 120% of the duration of the pretreatment, and **in that** the pretreated PET material is held at as uniform a temperature as possible, in particular from 130°C to 190°C, preferably from 150°C to 170°C, during temporary storage and/or while being supplied to the main treatment stage.

11. A method according to any one of claims 1 to 10, **characterised in that**, during the main treatment, which is carried out under vacuum, in particular at a pressure of less than 20 mbar, preferably less than 10 mbar, the pretreated PET pieces and/or the ground bottle material are mechanically treated at a temperature of 170°C to 210°C, preferably 180°C to 200°C, or undergo heat-inducing energy impingement by means of at least one, preferably rotating, mixing and/or comminuting device, the average residence time of the PET material or the duration of the main treatment being 40 to 100 mins, in particular 50 to 90 mins.

12. A method according to claim 11, **characterised in that** the main treatment is carried out at a pressure of less than 20 mbar, preferably less than 10 mbar.

13. A method according to any one of claims 1 to 10, **characterised in that**, during the main treatment carried out under vacuum, the pretreated PET sheets and/or PET fibres are treated at a temperature of 160°C to 210°C, preferably 170°C to 205°C, or undergo mechanical, heat-inducing energy impingement by means of at least one mixing and/or comminuting device, the average residence time of the PET material or the duration of the main treatment being 5 to 25 mins, in particular 10 to 15 mins.

14. A method according to claim 13, **characterised in that** the main treatment is carried out at a pressure of less than 150 mbar, preferably less than 50 mbar.

15. A method according to any one of claims 1 to 14, **characterised in that** a rotating mixing and/or comminuting device is used.

16. A method according to any one of claims 1 to 15, **characterised in that** the PET material is comminuted to dimensions of 15 mm to 25 mm before pretreatment.

17. A method according to any one of claims 1 to 16, **characterised in that** the accumulated PET material is precomminuted and/or washed and/or predried before pretreatment.

18. A method according to any one of claims 1 to 17, **characterised in that** the PET material is fed from the main treatment installation (4) to the extruder (8) under vacuum conditions, i.e. the vacuum in the main treatment installation (4) remains effective into the inlet region of the extruder (8).

19. Apparatus for carrying out the method according to any one of claims 1 to 18, wherein, for treatment of the accumulated plastics material, two treatment stages are provided, in the first of which a pretreatment installation (3) with mechanical treatment devices (5) for drying the material at an elevated temperature is provided for pretreatment of the accumulated material, this first stage being followed by a second treatment stage with an evacuatable main treatment installation (4) with mechanical treatment devices (5') for further drying of the material supplied from the pretreatment installation (3), and this second stage being followed by an installation for plasticising or melting the material, **characterised in that** the first stage contains mechanical treatment devices (5) for drying and simultaneously crystallising PET material and the second stage contains mechanical treatment devices (5') for further drying, crystallising and raising the temperature of the PET material.

20. Apparatus according to claim 19, **characterised in that** the pretreatment installation (3) also has treatment devices (5) for comminuting the PET material.

21. Apparatus according to claim 19 or 20, **characterised in that** at least one rotating mixing and/or comminuting device (5, 5'), which mechanically treats and heats the PET material, is arranged both in the pretreatment installation (3) and in the main treatment installation (4).

22. Apparatus according to claim 21, **characterised in that**, for the comminution of, in particular, PET pieces and/or ground bottle material, at least one mixing and comminuting device (5, 5') rotates in the pretreatment installation (3) with a circumferential speed of 9 to 15 m/s and in the main treatment installation (4) with a circumferential speed also of 9 to 15 m/s.

23. Apparatus according to claim 21, **characterised in that**, for the comminution of, in particular, PET sheets and/or PET fibres and/or PET flakes, at least one mixing and comminuting device (5, 5') rotates in both the pretreatment installation (3) and the main treatment installation (4) with a circumferential speed of 15 to 35 m/s, in particular 20 to 30 m/s.

24. Apparatus according to any one of claims 19 to 23, **characterised in that** a temporary store (6) is interposed between the pretreatment installation (3) and the main treatment installation (4) and its volume is 100% to 200% of the volume of the pretreatment installation (3).

25. Apparatus according to any one of claims 19 to 24, **characterised in that** a thermally insulated and/or heated conveyor unit (7), preferably a conveyor screw or an extruder, is arranged both between the pretreatment installation (3) and the temporary store (6) and between the temporary store (6) and the main treatment installation (4).

26. Apparatus according to any one of claims 19 to 25, **characterised in that** the volume of the main treatment installation (4) is 80% to 200%, in particular 100% to 180% of the volume of the pretreatment installation (3).

27. Apparatus according to any one of claims 19 to 26, **characterised in that** the main treatment installation (4) is connected to an extruder (8) in which the PET material discharged from the main treatment installation (4) is heated to a temperature of 260°C to 275°C and plasticised or melted.

28. Apparatus according to claim 27, **characterised in that** the extruder (8) is connected in a gas-tight or vacuum-tight manner to the main treatment installation (4), and the inlet region of the extruder (8) is in pressure communication with the interior of the main treatment installation (4), i.e. the pressure in the main treatment installation (4) corresponds to the pressure in the inlet region of the extruder (8).

29. Apparatus according to claim 27 or 28, **characterised in that** the extruder (8) has at least one outgassing zone (9) to which a vacuum pump (10) is connected, by means of which a pressure of less than 40 mbar, in particular less than 10 mbar, can be set in the outgassing zone (9).

30. Apparatus according to any one of claims 19 to 29, **characterised in that** a filtration installation (11) for PET melt is connected to the extruder (8), and an installation (12) for producing finished or semi-finished products, e.g. PET granulate, is optionally connected to the filtration installation (11).

31. Apparatus according to claim 30, **characterised in that** a measuring device (13) for determining the viscosity of the melt is arranged between the extruder (8) and the filtration installation (11).

32. Apparatus according to any one of claims 19 to 31, **characterised in that** the pressure in the main treatment installation (4) can be set to less than 150 mbar, preferably less than 20 mbar.

33. Apparatus according to any one of claims 19 to 32, **characterised in that** an additional heating means is provided for the pretreatment installation (3) and/or the main treatment installation (4).

## Revendications

1. Procédé de recyclage de matériau plastique selon lequel le matériau entrant est chauffé par agitation et par là même séché et est ensuite ramolli ou fondu, le matériau entrant étant traité en deux étapes, le matériau étant dans la première étape soumis à un traitement préalable par apport d'énergie mécanique qui le réchauffe et séché à une température relativement élevée, et ensuite, lors de la seconde étape précédant le ramollissement ou la fusion, un traitement principal du matériau étant effectué lors duquel le matériau est séché dans des conditions de vide par un nouvel apport d'énergie mécanique, **caractérisé en ce que** le matériau PET est cristallisé en même temps qu'il est séché lors de la première étape et est encore plus cristallisé lors de la seconde étape, dans laquelle le traitement principal s'effectue à une température supérieure à celle du traitement préalable, après quoi le matériau PET, après son ramollissement ou sa fusion et un éventuel filtrage, est transformé en granulat de PET ou en articles en PET.

2. Procédé selon la revendication 1, **caractérisé en ce que** le matériau PET entrant est soumis avant le traitement préalable à un prébroyage et/ou à un lavage et/ou à un préséchage.

3. Procédé selon la revendication 1 ou 2, **caractérisé en ce que** la température du traitement principal est elle aussi maintenue inférieure à la température de ramollissement du matériau PET.

4. Procédé selon l'une des revendications 1 à 3, **caractérisé en ce que** le traitement préalable des pièces en PET et/ou du broyat de bouteilles en PET s'effectue dans une plage de température de 140 à 190 °C, de préférence de 150 à 160 °C, en même temps qu'un traitement mécanique ou apport d'énergie mécanique provoquant un échauffement au moyen d'au moins un élément mélangeur et/ou concasseur, le temps de séjour moyen du matériau PET, c'est-à-dire la durée du traitement préalable, étant de 35 à 65 min, de préférence 40 à 60 min.

5. Procédé selon l'une des revendications 1 à 3, **caractérisé en ce que** le traitement préalable des films de PET et/ou fibres PET et/ou flocons de PET s'effectue dans une plage de température de 170 à 200 °C, de préférence de 180 à 200 °C, en même temps qu'un traitement mécanique ou apport d'énergie mécanique provoquant un échauffement au moyen d'au moins un élément mélangeur et/ou concasseur, le temps de séjour moyen du matériau PET, c'est-à-dire la durée du traitement préalable, étant de 10 à 30 min, de préférence 10 à 15 min.

6. Procédé selon l'une des revendications 1 à 5, **caractérisé en ce que** le traitement préalable s'effectue lui aussi sous vide.

7. Procédé selon la revendication 4 ou 5, **caractérisé en ce que** le traitement préalable s'effectue sous pression ambiante.

8. Procédé selon la revendication 4, **caractérisé en ce que** à cette température l'eau de surface s'évapores immédiatement et le temps de séjour prolongé a pour effet de faire migrer aussi une portion considérable de la humidité absorbée et des autres contaminants absorbés.

9. Procédé selon l'une des revendications 1 à 8, **caractérisé en ce que** le matériau PET est soumis au traitement préalable en flux continu.

10. Procédé selon l'une des revendications 1 à 9, **caractérisé en ce que** le matériau PET prétraité est soumis, entre le traitement préalable et le traitement principal, à un stockage temporaire dont la durée est égale à 80 à 120 % de la durée du traitement préalable, et **en ce que** le matériau PET prétraité est maintenu lors du stockage temporaire et/ou lors de l'acheminement vers le traitement principal à une température la plus constante possible, comprise en particulier entre 130 et 190 °C, et de préférence entre 150 et 170 °C.

11. Procédé selon l'une des revendications 1 à 10, **caractérisé en ce que** lors du traitement principal effectué sous vide, en particulier sous une pression inférieure à 20 mbar, et de préférence inférieure à 10 mbar, les pièces en PET prétraitées et/ou le broyat de bouteilles PET sont traités mécaniquement ou soumis à une énergie mécanique provoquant un échauffement au moyen d'au moins un élément mélangeur et/ou concasseur, de préférence rotatif, à une température de 170 à 210 °C, de préférence 180 à 200 °C, le temps de séjour moyen du matériau PET, c'est-à-dire la durée du traitement principal, étant de 40 à 100 min, en particulier de 50 à 90 min.

12. Procédé selon la revendication 11, **caractérisé en ce que** le traitement principal est exécuté sous une pression inférieure à 20 mbar, de préférence inférieure à 10 mbar.

13. Procédé selon l'une des revendications 1 à 10, **caractérisé en ce que** lors du traitement principal effectué sous vide, les films de PET et/ou les fibres PET prétraités sont traités ou soumis à une énergie mécanique provoquant un échauffement au moyen d'au moins un élément mélangeur et/ou concasseur, à une température de 160 à 210 °C, de préférence 170 à 205 °C, le temps de séjour moyen du matériau PET, c'est-à-dire la durée du traitement principal, étant de 5 à 25 min, en particulier de 10 à 15 min.

14. Procédé selon la revendication 13, **caractérisé en ce que** le traitement principal est exécuté sous une pression inférieure à 150 mbar, de préférence inférieure à 50 mbar.

15. Procédé selon l'une des revendications 1 à 14, **caractérisé en ce qu'**il met en oeuvre un élément mélangeur et/ou concasseur rotatif.

16. Procédé selon l'une des revendications 1 à 15, **caractérisé en ce que** le matériau PET est concassé à une granulométrie de 15 à 25 mm avant le traitement préalable.

17. Procédé selon l'une des revendications 1 à 16, **caractérisé en ce que** le matériau PET entrant est préconcassé et/ou lavé et/ou préséché avant le traitement préalable.

18. Procédé selon l'une des revendications 1 à 17, **caractérisé en ce que** le matériau PET est transféré du moyen de traitement principal (4) à l'extrudeuse (8) dans des conditions de vide, autrement dit que le vide régnant dans le moyen de traitement principal (4) agit jusque dans la zone d'admission de l'extrudeuse (8).

19. Dispositif pour la mise en oeuvre du procédé selon l'une des revendications 1 à 18 prévoyant deux étapes de traitement du matériau plastique entrant, dont la première prévoit, en vue d'un traitement préalable du matériau entrant, un moyen de traitement préalable (3) comportant des éléments de traitement mécanique (5) pour un séchage du matériau à température relativement élevée, cette première étape étant suivie d'une seconde étape de traitement par un moyen de traitement principal (4) dans lequel on peut créer le vide et comportant des éléments de traitement mécanique (5') pour un séchage supplémentaire du matériau provenant du moyen de traitement préalable (3), un moyen pour ramollir ou faire fondre le matériau succédant à cette seconde étape, **caractérisé en ce que** la première étape comprend des éléments de traitement mécanique (5) pour le séchage et la cristallisation simultanés du matériau PET et **en ce que** la seconde étape comprend des éléments de traitement mécanique (5') pour un séchage, une cristallisation et une élévation de température du matériau PET supplémentaires.

20. Dispositif selon la revendication 19, **caractérisé en ce que** le moyen de traitement préalable (3) présente également des éléments de traitement (5) destinés à concasser le matériau PET.

21. Dispositif selon la revendication 19 ou 20, **caractérisé en ce qu'**au moins un élément mélangeur et/ou concasseur (5, 5') rotatif qui traite mécaniquement et réchauffe le matériau PET est agencé à la fois dans le moyen de traitement préalable (3) et dans le moyen de traitement principal (4).

22. Dispositif selon la revendication 21, **caractérisé en ce que** pour le concassage, notamment de pièces en PET et/ou de broyat de bouteilles PET, au moins un élément mélangeur et/ou concasseur (5, 5') tourne à une vitesse périphérique comprise entre 9 et 15 m/s dans le moyen de traitement préalable (3) et à une vitesse périphérique également comprise entre 9 et 15 m/s dans le moyen de traitement principal (4).

23. Dispositif selon la revendication 21, **caractérisé en ce que** pour le concassage, notamment de films de PET et/ou fibres de PET et/ou flocons de PET, au moins un élément mélangeur et/ou concasseur (5, 5') tourne dans le moyen de traitement préalable (3) ainsi que dans le moyen de traitement principal (4) à une vitesse périphérique comprise entre 15 et 35 m/s, et en particulier entre 20 et 30 m/s.

24. Dispositif selon l'une des revendications 19 à 23, **caractérisé en ce qu'**un silo temporaire (6) dont le volume est égal à 100 à 200 % du volume du moyen de traitement préalable (3) est intercalé entre le moyen de traitement préalable (3) et le moyen de traitement principal (4).

25. Dispositif selon l'une des revendications 19 à 24, **caractérisé en ce qu'**un système de convoyage (7) calorifugé et/ou chauffé, de préférence une vis transporteuse ou une extrudeuse, est intercalé entre le moyen de traitement préalable (3) et le silo temporaire (6) ainsi qu'entre le silo temporaire (6) et le moyen de traitement principal (4).

26. Dispositif selon l'une des revendications 19 à 25, **caractérisé en ce que** le volume du moyen de traitement principal (4) est égal à 80 à 200 %, en particulier 100 à 180 % du volume du moyen de traitement préalable (3).

27. Dispositif selon l'une des revendications 19 à 26, **caractérisé en ce qu'**une extrudeuse (8) est raccordée au moyen de traitement principal (4), extrudeuse dans laquelle le matériau PET extrait du moyen de traitement principal (4) est chauffé et ramolli ou fondu à une température de 260 à 275 °C.

28. Dispositif selon la revendication 27, **caractérisé en ce que** l'extrudeuse (8) est raccordée au moyen de traitement principal (4) de manière étanche aux gaz ou au vide et **en ce que** la zone d'admission de l'extrudeuse (8) communique en pression avec l'intérieur du moyen de traitement principal (4), autrement dit que la pression régnant dans le moyen de traitement principal (4) correspond à la pression régnant dans la zone d'admission de l'extrudeuse (8).

29. Dispositif selon la revendication 27 ou 28, **caractérisé en ce que** l'extrudeuse (8) présente au moins une zone de dégazage (9) à laquelle est raccordée une pompe à vide (10) qui permet de régler la pression de la zone de dégazage (9) à une valeur inférieure à 40 mbar, et en particulier inférieure à 10 mbar.

30. Dispositif selon l'une des revendications 19 à 29, **caractérisé en ce qu'**un moyen de filtrage (11) du PET fondu est raccordé à l'extrudeuse (8) et **en ce qu'**un moyen (12) est éventuellement raccordé au dit moyen (11) pour la fabrication de produits finis ou semi-finis, du granulat de PET par exemple.

31. Dispositif selon la revendication 30, **caractérisé en ce qu'**un moyen de mesure (13) destiné à déterminer la viscosité du matériau fondu est disposé entre l'extrudeuse (8) et le moyen de filtrage (11).

32. Dispositif selon l'une des revendications 19 à 31, **caractérisé en ce que** la pression régnant dans le moyen de traitement principal (4) peut être réglée à une valeur inférieure à 150 mbar, et de préférence inférieure à 20 mbar.

33. Dispositif selon l'une des revendications 19 à 32, **caractérisé en ce qu'**il est prévu un système de chauffage supplémentaire pour le moyen de traitement préalable (3) et/ou pour le moyen de traitement principal (4).
